# EUROPEAN PATENT APPLICATION

(11) **EP 2 927 824 A1**
(43) Date of publication of application: **07.10.2015**
(21) Application number: 15162265.1
(22) Date of filing: 01.04.2015
(51) Int. Cl.: G06F 17/30

(54) **COMPUTER-IMPLEMENTED SYSTEM AND METHOD FOR INDEXING ELECTRONIC DOCUMENTS**

(30) Priority: 01.04.2014 GB 201405875
(71) Applicant: Kainos Evolve Limited, Belfast, Antrim BT7 1NT (GB)
(72) Inventor: Allen, Alastair, Bangor, Down BT20 3RF (GB); Lyttle, Graham, Lisburn, Down BT27 6UF (GB)
(74) Representative: Wallace, Alan Hutchinson

(57) **Abstract**

A computer-implemented method of indexing a multi-page electronic document. The method involves image scanning a physical document to produce the electronic document, and performing text extraction, for example optical character recognition, on the electronic document to produce computer readable text. Each page of the electronic document is classified in respect of category types by applying classification rules to the computer readable text. Metadata is associated with each page to indicate the assigned category types. A computer usable index is created using the metadata, the index organising the pages according to category type.

## Description

### Field of the Invention

The present invention relates to indexing electronic documents.

### Background to the Invention

There is increasingly a desire to computerise paper files and typically this involves scanning paper documents to produce corresponding electronic documents. For example, the traditional process of indexing patient records can be extremely manual, typically involving preparation of a case note through the addition of bar-coded cover sheets and separator pages. Despite this manual process being very time consuming and therefore costly, it generally does not enable clinicians to readily locate the relevant information they need to treat their patients, particularly for large patent records as is normally the case for patients with long-term medical conditions.

It would be desirable therefore to provide improved means for computerising paper documents, and in particular to allow the resulting electronic documents to be usefully indexed.

### Summary of the Invention

A first aspect of the invention provides a computer-implemented method of indexing a multi-page electronic document, the method comprising: classifying each page of said electronic document in respect of at least one category having at least one respective category type, wherein said classifying involves applying at least one classification rule to computer readable text associated with the respective page to assign at least one category type to said page; associating with each page data indicative of said at least one category type assigned to said page; creating a computer usable index with said data, said index organising said pages according to said at least one category and/or the respective at least one category type.

Typically, said data comprises metadata. Preferably a respective index is created for each page. Creating said index typically involves populating an index template with said data.

A second aspect of the invention provides a computer-implemented system for indexing a multi-page electronic document, the system comprising a document indexing module for classifying each page of said electronic document in respect of at least one category having at least one respective category type, wherein said document indexing module supports at least one classification process for applying at least one classification rule to computer readable text associated with the respective page to assign at least one category type to said page, said document indexing module being configured to associate with each page data indicative of said at least one category type assigned to said page, and a computer usable index of said data, said index organising said pages according to said at least one category and/or the respective at least one category type.

Typically said document indexing module is configured to create said index using said data.

The preferred system includes a text extraction tool for performing text extraction on said document.

The preferred system includes at least one image scanner for image scanning a physical document to produce said electronic document.

In preferred embodiments, a physical document is image scanned to create said electronic document, preferably so that each page of said electronic document corresponds to a respective page of said physical document.

Typically, text extraction, for example involving optical character recognition (OCR), is performed on said electronic document to obtain said computer readable text.

Other preferred features are recited in the dependent claims filed herewith.

Preferred embodiments of the invention may provide a method and means of identifying patterns from (complete) records, e.g. patient records, compiled in real time from disparate data held in legacy case notes, GP correspondence and diverse hospital systems. This helps medical staff to predict and prevent emerging conditions.

The preferred system and method involve the application of relevant metadata to electronic documents enabling quick and easy navigation to the correct information by a clinician via a computer interface.

Further advantageous aspects of the invention will be apparent to those ordinarily skilled in the art upon review of the following description of a specific embodiment and with reference to the accompanying drawings.

### Brief Description of the Drawings

An embodiment of the invention is now described by way of example and with reference to the accompanying drawings in which:
Figure 1 is a block diagram of a system for indexing electronic documents, the system embodying one aspect of the invention;
Figure 2 is a flow chart illustrating the operation of a document indexing module embodying another aspect of the invention and being part of the system of Figure 1;
Figure 3 is illustrates a rules repository for use by the document indexing module;
Figure 4 is a flow chart illustrating a classification process implemented by the preferred document indexing module;
Figure 5 is a flow chart illustrating a cross-category look up process implemented by the preferred document indexing module; and
Figure 6 is a flow chart illustrating a date determination process being implemented by the preferred document indexing module.

### Detailed Description of the Drawings

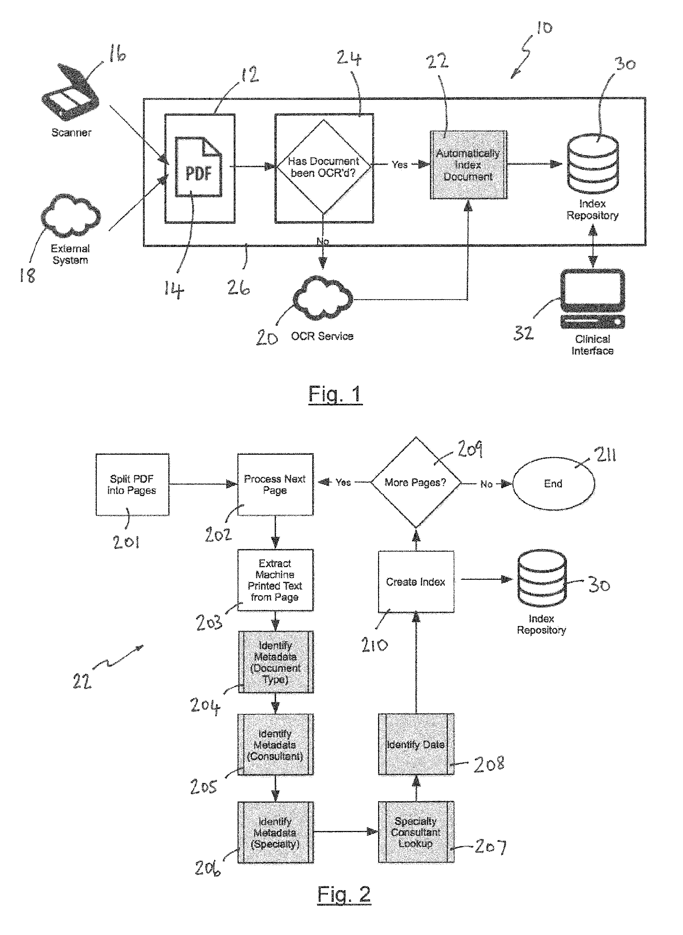

Referring now to Figure 1 of the drawings there is shown, generally indicated as 10, a system for indexing electronic documents, the system being an exemplary embodiment of one aspect of the present invention. The system 10 is implemented by one or more computer programs supported by one or more computers or other electronic hardware devices, as is convenient and as would be apparent to a skilled person. The components (hardware and software) of the system 10 may be centralized or distributed as is convenient. Any distributed components may communicate with the other components as required by any convenient conventional computer network or other computer communication means, e.g. LAN, WAN, internet, Ethernet, or as a peripheral computing device.

The system 10 typically includes a document store 12 that may be implemented by any convenient computer memory. During use, the store 12 stores one or more electronic documents 14. In preferred embodiments, each document 14 comprises a digital representation of a respective physical document (not shown), typically a paper document, especially a document containing text and in particular machine printed text. For illustrative purposes, the documents 14 of the present embodiment are assumed to have been generated from physical patient records. Usually the physical document comprises multiple pages. The respective electronic document 14 typically also comprises multiple pages, each page of the electronic document preferably corresponding to a respective page of the physical document.

The electronic document 14 may be obtained by image scanning the physical document. To this end the system 10 may include one or more image scanners 16 from which electronic documents may be provided to the store 12. Alternatively, or in addition, the system 10 may be configured to receive electronic documents 12 from one or more external computer systems 18, which may include one or more image scanners and/or other electronic document creation tools. In either case, the electronic document 14 may comprise a digital image of each page of the physical document, or may comprise any other digital form. In the illustrated embodiment, the electronic document 14 is assumed to comprise a Portable Document Format (PDF) document (typically but not necessarily produced by image scanning).

Typically, each document 14 comprises multiple pages, pagination being performed during creation of the electronic document 14. In cases where the document 14 is created by scanning a multi-page physical document, the pagination is such that each page of the electronic document 14 corresponds to a respective page of the physical document.

In some cases, the system 10 may receive or create electronic documents 14 that include computer readable text. This may be because the document 14 is in a format that supports computer readable text. More typically it is necessary to extract text from the document 14, and in particular machine printed text. Any conventional text extraction process by be employed for this purpose. In preferred embodiments, optical character recognition (OCR) is performed on the electronic document 14 in order to extract its text content in a computer readable form. For example, in cases where the electronic document 14 comprises a digital image, OCR may be performed to extract the text. The extracted text may be embedded in the electronic document 14 or included in a new electronic representation of the document 14. The text extraction may be performed before the document 14 is stored by the system 10, for example by an OCR tool or other text extraction tool included in the external computer system 18 or associated with the scanner 16. Alternatively, the text extraction may be performed by the system 10 after storage or receipt by the system 10, i.e. the system 10 may perform "on-the-fly" text extraction on electronic documents 14 received by it where necessary. To this end the system 10 may include a text extraction tool 20, for example an OCR tool. Any conventional OCR tool may be used for this purpose. For example, text extraction tool 20 may comprise OCR, or other text extraction, computer software supported by a computing device.

The system 10 includes a document indexing module 22 for analysing the text content of the document 14 in order to generate an index. The module 22 analyses computer readable text and so the document 14 may be provided directly to the module 22 if it comprises computer readable text, or via the text extraction tool 20 if it does not.

The system 10 preferably includes a pre-processing module 24 for determining if a document 14 in the store 12 includes computer readable text. For example, the module 24 may determine if the document 14 includes embedded computer readable text, which would be the case if for example the document 14 is a PDF document created by an image scanner and which has already been subjected to OCR. If module 24 determines that the document 14 does not include computer readable text, then it may cause the document to be processed by the text extraction tool 20. Conveniently, the text extraction tool 20 may provide the document 14 to the indexing module 22 after text extraction. If module 24 determines that the document 14 does comprise computer readable text then the document 14 may be provided to the document indexing module 22.

The system 10 also includes index storage means, shown in Figure 1 as index repository 30. The index repository 30 may be implemented in computer memory in any convenient manner. As is described in more detail hereinafter, the document indexing module 22 generates data for creating a computer usable index (not illustrated) for each document 14 and stores the data in the index repository 30. As is described in more detail hereinafter, the preferred index organises the pages of each document 14 according to one or more relevant categories, and preferably accordingly to types within each category. In the preferred embodiment, the document indexing module 22 creates an index by populating an index template with the metadata for each page and then stores the index in the index repository 30. Preferably, a respective index is created for each page, the page and respective index each being assigned a respective page reference to associate them with one another.

The repository 30 is accessible by one or more computing devices 32 supporting a program (or client) that provides user interface allowing a user to use the respective index to review the contents of the respective document 14 and to access individual pages of the document 14. To this end, the client program also supports the index template used by the document index module 22 to create the index. Typically, the interface and the repository 30 are co-operable to allow selected documents and/or pages to be rendered to the user via the user interface. For this purpose, the document 14 may be stored in any convenient location, e.g. in the store 12 or repository 30. Preferably, the document is stored in a document repository separate from the index repository. The index repository 30 is used by the user interface to search for documents 14. Each index may include a document reference indicating where the respective document 14 resides in the document repository, Each index preferably also includes the respective page reference indicating the location of the respective page. When the user makes a document or page selection via the interface, the respective document and/or page reference may be used by the interface to retrieve the relevant page/document from the document repository.

In the illustrated example, the document indexing module 22 and pre-processing module 24 are implemented by computer software supported by a central computing device 26. The store 12 is conveniently provided at the central computing device 26. The index repository 30 is also conveniently provided at the central computing device 26. The scanner(s) 16 may be connected to the central computing device 26 as peripheral unit(s) or via a computer network. The external system(s) 20 are typically connected to the computing device 26 via a computer network. The text extraction tool 20 is assumed to be supported by an external computing device connected to the device 26 by a computer network, although may alternatively be supported by the device 26 itself. The computing device(s) 32 are typically separate from device 26, but being connectable to the device 26 by a computer network.

Referring now to Figure 2 of the drawings, a preferred embodiment of the document indexing module 22 is described. Assuming that the document 16 is multi-page, the module 22 identifies the individual pages and processes them one at a time (201, 202, 209). The module 22 obtains the computer readable text associated with the respective page of the document 14 (203). In the present example this involves obtaining the embedded computer readable machine printed text from the document 14. The module 22 then implements at least one, but preferably a plurality of, classification processes (204, 205, 206) on the computer readable text for the respective page. Advantageously, each classification process (204, 205, 206) classifies the page in respect of a respective category, each category having a plurality of types with which the page can be associated. After classification, each page is assigned one or more types from each category (where possible). Data, conveniently in the form of metadata, indicating the relevant assigned types is associated with each page of the document. In the illustrated example, a respective classification process (204, 205, 206) is performed for the categories "Document Type", "Consultant" and "Speciality". By way of example, the types within the category "Document Type" may be the types of document that the respective page may be identified as, e g. "correspondence", "report", or "form", the types within the category "Consultant" may be the names of the consultants that may be associated with the page, and the types within the category "Speciality" may be the types of medical speciality that may be associated with the page.

Optionally, the module 22 implements one or more cross-category look up process (207) which infers that the page is associated with one or more type of one or more category depending on how the page is classified with respect to one or more other categories. In the present example, the module 22 implements a cross-category look up process (207) that allows consultants' names to be inferred from specialities that have been identified, and vice versa. Data, conveniently in the form of metadata, indicating the relevant inferred type(s) is associated with each page of the document.

Optionally, the module 22 implements a date identification process (208) that identifies one or more dates to be associated with the page. Data, conveniently in the form of metadata, corresponding to the relevant identified date(s) is associated with each page of the document. In this context, the date may be regarded as a specific category in respect of which the pages of the document 14 can be classified. In the preferred embodiment, the types associated with the date category correspond with respective individual days. However, the types may alternatively, or in addition, correspond with date ranges, e.g. one or more weeks, months or years. Hence the date metadata may identify one or more specific dates (i.e. specific days) and/or one or more date ranges.

The module 22 processes each page of the document 14 (202, 209). The metadata generated for each page is stored in the index repository 30. In the preferred embodiment, the module 22 implements an index creation process 210 in which the metadata created for each page is used to create the index for the page in accordance with the index template. Conveniently, the metadata for each page is inserted into the index template using key - value pairs, where the key represents a category and the value represents a valid type for the category. The index creation process 210 stores each page index in the index repository 30. When an index has been created for each page, the module 22 ends 211. The page reference assigned to each page and respective page index ensures that the relevant metadata is associated with the relevant page.

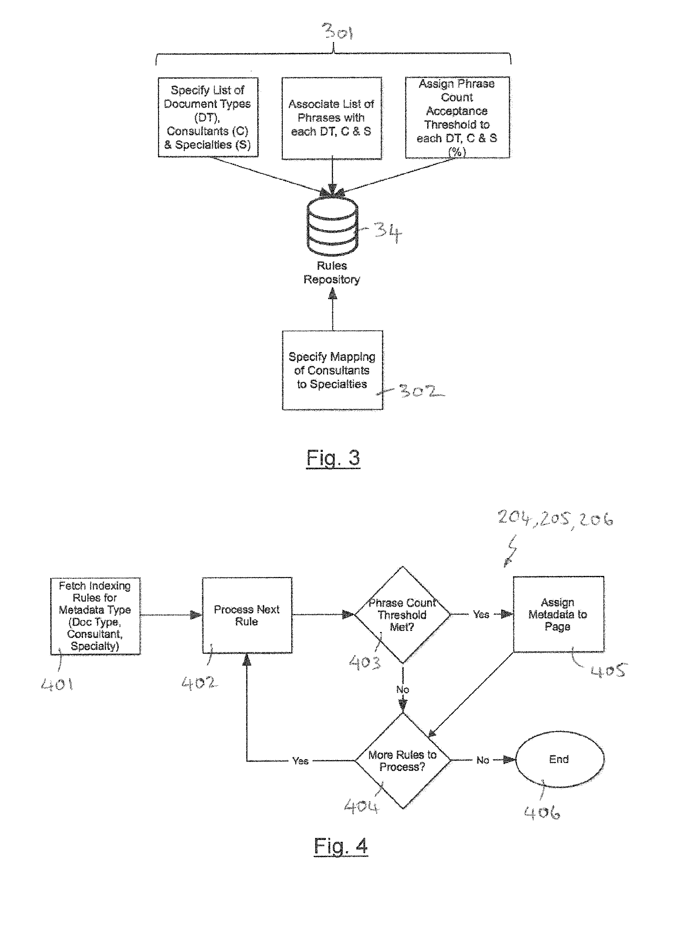

Referring now to Figures 3 and 4, there is illustrated an example of the classification process 204, 205, 206. Preferably, the classification process 204, 205, 206 performs rules based classification on the computer readable text of the document 14. The computer readable text is typically generated from machine printed text of the original physical document. Rules 301 are defined that may be applied by the classification process 204, 205, 206 to the computer readable text in order to determine which type(s) from which category(ies) are to be assigned to the document 14. The preferred classification process is performed on a page-by-page basis such that each page of the document 14 is classified in the manner described. Conveniently, a respective set of rules 301 is defined for each category. The rules 301 are stored in any convenient storage means, shown in Figure 3 as rules repository 34. The rules repository 34 may be implemented in computer memory in any suitable manner, and may conveniently be provided at the central computing device 26.

In the preferred embodiment, the rules 301 associate one or more character strings with each category. Each character string may for example comprise a word or phrase or code or number that may appear in the document 14 (and more particularly in the computer readable text) and which can be associated with one or more of the categories. The rules 301 also associate one or more of the character strings for each category with one or more of the types within the respective category. The rules 301 may define one or more threshold levels for each category type, each threshold level relating to the occurrence of one or more character strings associated with the respective type that needs to be detected to conclude that a page belongs to the respective type. For example, the rules 301 may define a threshold level for a respective category type indicating a percentage of all of the character strings associated with the respective type that are to be detected in a page in order for the page to be deemed to belong to the respective type. Alternatively or in addition, the rules 301 may define a threshold level for a respective category type indicative of the combined number of instances of any one or more of the character strings associated with the respective type that, if detected in a page, indicates that the page belongs the respective type. Alternatively, or in addition, the rules 301 may define a threshold level for a respective category type indicative of the number of instances of one or more specific character strings associated with the respective type that, if detected in a page, indicates that the page belongs the respective type. One or more respective threshold levels may be defined that indicate how many other threshold levels must be exceeded before a page is deemed to belong to a respective type. Hence, each rule may stipulate that a page belongs to a particular type if the occurrence of one or more relevant character strings in the page satisfies a respective one or more threshold level, or that the number of satisfied threshold levels satisfies a further threshold level.

In the preferred embodiment, for each page the classification process 204, 205, 206 obtains the rules 301 that are relevant to the category in respect of which the page is to be classified (401). The obtained rules 301 are applied to the computer readable text of the page (402), preferably one at a time. This involves detecting, in the computer readable text, the presence of the or each character string associated with the respective rule. After a rule is applied, a determination can be made as to whether or not the or each relevant threshold count has been met (403). If one or more threshold count has been met, then corresponding metadata is assigned to the respective page indicating that the page is deemed to be of a particular type (404). If the threshold level(s) have not been met, then the next rule is applied (405, 402) or the process may end if there are no more rules to apply (405, 406). In the illustrated embodiment, after metadata has been assigned to the page (404), the process continues to apply any remaining rules (405, 402). This allows more than one type to be assigned to the page. Alternatively, the process 204, 205, 206 may terminate after the first type has been assigned (i.e. after step 404 is executed for the first time).

By way of example, the document type "correspondence" may be associated with a list of character strings such as "Dear", "Yours Sincerely", "Acme NHS Trust" and "Re". One rule may stipulate that a page is assigned the type "correspondence" if a threshold level of, say, 75% of the character strings from the list are detected in the page. Another rule may stipulate that a page is assigned the type "correspondence" if the string "Yours Sincerely" appears once in the page.

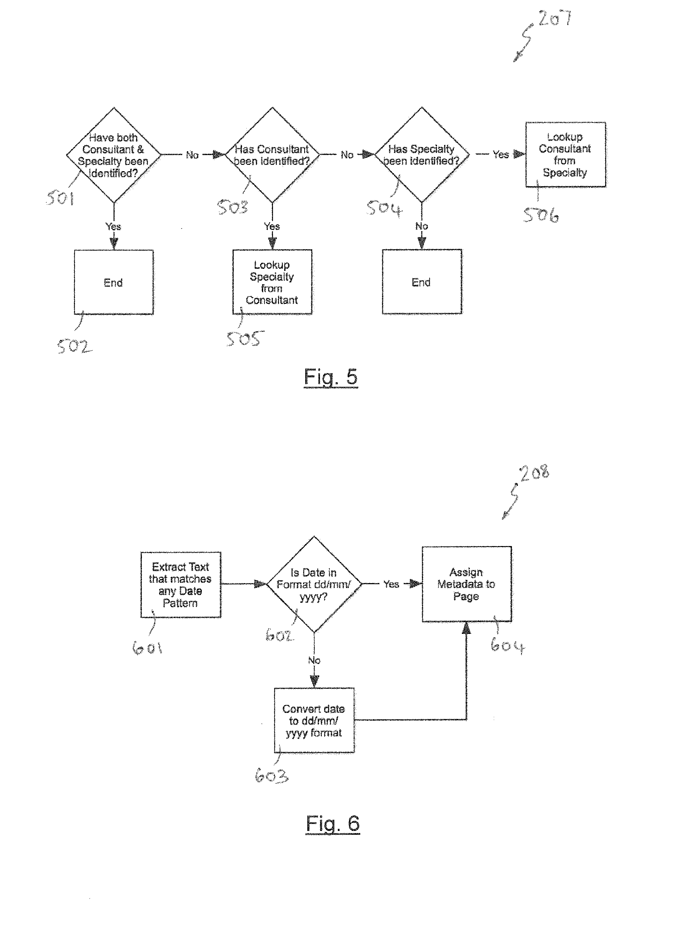

Referring now to Figure 5, there is illustrated an example of the cross category look-up process 207. The example of Figure 5 assumes that two categories ("Consultant" and "Speciality") can be cross-referenced although in alternative embodiments more than two categories could be cross-referenced. The process 207 determines if the respective page has already been classified in respect of each category to be cross-checked (501). Typically this involves determining if the page is already associated with metadata indicating that it is been assigned to at least one type for each category. If the page has already been classified for each category then the process ends (502). Otherwise the process 207 checks if the page has been classified in respect of any one of the categories (503, 504). If the page has been classified in respect of one of the categories, then the process 207 refers to a look-up table 302 or other mapping that cross-references the respective categories to classify the page in respect of the other category(ies) (505, 506). The look-up table may cross-reference one or more types associated with any one category with one or more types associated with one or more other categories. Hence, classification of a page in respect of a category using the look-up table may involve assigning to the page one or more types associated with that category according to the look-up table. The look-up table may implemented in computer memory in any suitable manner, and may conveniently be provided at the central computing device 26. The look-up table is provided in the rules repository 34 in the present example.

Referring now to Figure 6, there is illustrated an example of the date identification process 208. The process 208 is capable of identifying character strings that are in a date format, preferably in any one of a plurality of date formats. The process 208 analyses the computer readable text of the page and determines if the text contains any character strings that correspond to a supported date format (601). Supported date formats may for example include: "_ _ / _ _ / _ _ , "_ _ / _ _ / _ _ _ _ , and/or "_ _ XXXXXXXXX _ _ _ _", where each "_" may be any relevant numeral and each "X" represents a letter in the name of a month. When a character string corresponding to a supported data format is detected, the relevant date information is extracted from the string and corresponding metadata is associated with the page (601, 604). Optionally, the extracted date information is converted into a preferred format, if required, before being used to create the metadata (602, 603).

In preferred embodiments, the metadata contained within the index repository 30 allows an index to be created which enables individual pages of a document 14 to be identified according to the category and/or type assigned to them by the document indexing module 22, conveniently via a user interface supported by the client(s) 32. Advantageously, the index facilitates organisation of the pages by date. Advantageously, the system 10 allows an electronic version of a physical file to be created in which the pages of the file can readily be identified and accessed according to category, type and/or date.

Methods embodying the invention may be implemented in software, firmware, hardware, or a combination thereof. In one mode, the method is implemented in software, as one or more executable program, and is executed by one or more special or general purpose digital computer(s), such as a personal computer (PC; IBM-compatible, Apple-compatible, or otherwise), personal digital assistant, workstation, minicomputer, or mainframe computer. The steps of the method may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

The processor(s) may be programmed to perform the functions of the method as described above. The processor(s) is a hardware device for executing software, particularly software stored in memory. Processor(s) can be any custom made or commercially available processor, a central processing unit (CPU), an auxiliary processor among several processors associated with a computer, a semiconductor based microprocessor (in the form of a microchip or chip set), a macroprocessor, or generally any device for executing software instructions.

Memory is associated with processor(s) and can include any one or a combination of volatile memory elements (e.g., random access memory (RAM, such as DRAM, SRAM, SDRAM, etc.)) and non-volatile memory elements (e.g., ROM, hard drive, tape, CDROM, etc.). Moreover, memory may incorporate electronic, magnetic, optical, and/or other types of storage media. Memory can have a distributed architecture where various components are situated remote from one another, but are still accessed by processor(s). The software in memory may include one or more separate programs. The separate programs comprise ordered listings of executable instructions for implementing logical functions in order to implement the functions of the modules. In the example of heretofore described, the software in memory includes the one or more components of the method and is executable on a suitable operating system (O/S).

The present teaching may include components provided as a source program, executable program (object code), script, or any other entity comprising a set of instructions to be performed. When a source program, the program needs to be translated via a compiler, assembler, interpreter, or the like, which may or may not be included within the memory, so as to operate properly in connection with the O/S. Furthermore, a methodology implemented according to the teaching may be expressed as (a) an object oriented programming language, which has classes of data and methods, or (b) a procedural programming language, which has routines, subroutines, and/or functions, for example but not limited to, C, C++, Pascal, Basic, Fortran, Cobol, Perl, Java, and Ada.

When the method is implemented in software, it should be noted that such software can be stored on any computer readable medium for use by or in connection with any computer related system or method. In the context of this teaching, a computer readable medium is an electronic, magnetic, optical, or other physical device or means that can contain or store a computer program for use by or in connection with a computer related system or method. Such an arrangement can be embodied in any computer readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. Any process descriptions or blocks in the Figures, should be understood as representing modules, segments, or portions of code which include one or more executable instructions for implementing specific logical functions or steps in the process, as would be understood by those having ordinary skill in the art.

The invention is not limited to the embodiment(s) described herein but can be amended or modified without departing from the scope of the present invention.

## Claims

1. A computer-implemented method of indexing a multi-page electronic document, the method comprising:
classifying each page of said electronic document in respect of at least one category having at least one respective category type, wherein said classifying involves applying at least one classification rule to computer readable text associated with the respective page to assign at least one category type to said page;
associating with each page data indicative of said at least one category type assigned to said page;
creating a computer usable index with said data, said index organising said pages according to said at least one category and/or the respective at least one category type.

2. The method of claim 1, wherein for each category said index organises said pages according to said respective at least one category type.

3. The method of claim 1 or 2, further including image scanning a physical document to create said electronic document, said image scanning preferably being performed so that each page of said electronic document corresponds to a respective page of said physical document.

4. The method of any preceding claim, further including performing text extraction on said electronic document to obtain said computer readable text, said text extraction for example involving performing optical character recognition (OCR) on said electronic document.

5. The method of claim 4, wherein said text extraction is performed in respect of machine printed text included in said physical document.

6. The method as claimed in claim 4 or 5, wherein said text extraction is performed page-by-page.

7. The method of any preceding claim, further including providing a computer interface allowing user interaction with said index, rendering via said interface one or more of said pages selected by user interaction with said index.

8. The method of any preceding claim, wherein said applying at least one classification rule involves implementing at least one of a plurality of classification processes on the computer readable text for the respective page, each classification process involving applying at least one respective classification rule to classify the respective page in respect of a respective category, each category having a plurality of respective types with which the respective page can be associated.

9. The method of any preceding claim, further including associating at least one respective character string with said at least one type from said at least one category, and wherein said applying at least one classification rule involves detecting the occurrence of one or more of said at least one character strings in the computer readable text of the respective page, and assigning one or more of said at least one type to the respective page depending on said occurrence.

10. The method of claim 9, further including defining at least one respective threshold level for said at least one type, said at least one threshold level relating to said occurrence of said at least one respective character strings, and wherein said assigning involves comparing said occurrence against one or more of said at least one respective threshold level and assigning one or more of said at least one type to the respective page if the respective threshold level is satisfied, and wherein said defining at least one threshold level optionally involves defining a respective threshold level for a respective type indicating a percentage of all of the character strings associated with the respective type that are to be detected in the respective page in order for the page to be deemed to belong to the respective type.

11. The method of claim 10, wherein said defining at least one threshold level involves defining a respective threshold level for a respective type being indicative of the number of instances of one or more specific character strings associated with the respective type that, if detected in the respective page, indicates that the page belongs the respective type.

12. The method of any preceding claim, further including inferring that the respective page is associated with one or more type of one or more category depending on how the respective page is classified with respect to one or more other categories.

13. The method of any preceding claim, wherein said at least one category includes a date category, and wherein said applying at least one classification rule involves detecting at least one character string in said computer readable text that identifies a date, and wherein said at least one category type for said data category comprises a date or a range of dates.

14. The method of any preceding claim, further including linking said index with said document by a reference value, and/or linking said index with a respective page by a reference value.

15. A computer-implemented system for indexing a multi-page electronic document, the system comprising a document indexing module for classifying each page of said electronic document in respect of at least one category having at least one respective category type, wherein said document indexing module supports at least one classification process for applying at least one classification rule to computer readable text associated with the respective page to assign at least one category type to said page, said document indexing module being configured to associate with each page data indicative of said at least one category type assigned to said page, and a computer usable index of said data, said index organising said pages according to said at least one category and/or the respective at least one category type.
